# EUROPÄISCHE PATENTSCHRIFT

(11) **EP 3 114 800 B1**
(45) Veröffentlichungstag und Bekanntmachung des Hinweises auf die Patenterteilung: **11.04.2018**
(21) Anmeldenummer: 15707341.2
(22) Anmeldetag: 27.02.2015
(51) Int. Cl.: H04L 12/40, H04L 12/413, H04L 25/02

(54) **TEILNEHMERSTATION FÜR EIN BUSSYSTEM UND VERFAHREN ZUR VERBESSERUNG DER SENDEQUALITÄT IN EINEM BUSSYSTEM**
SUBSCRIBER STATION FOR A BUS SYSTEM AND METHOD FOR IMPROVING THE QUALITY OF TRANSMISSION IN A BUS SYSTEM
STATION D'ABONNÉ POUR UN SYSTÈME DE BUS ET PROCÉDÉ D'AMÉLIORATION DE LA QUALITÉ D'ÉMISSION DANS UN SYSTÈME DE BUS

(30) Priorität: 05.03.2014 DE 102014204050
(43) Veröffentlichungstag der Anmeldung: 11.01.2017
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); HEHEMANN, Ingo, 49170 Hagen A.T.W (DE)
(86) Internationale Anmeldenummer: PCT/EP2015/054124
(87) Internationale Veröffentlichungsnummer: WO 2015/132145

(56) Entgegenhaltungen:
- EP-A2- 0 858 195
- WO-A1-2006/043229

## Beschreibung

Die vorliegende Erfindung betrifft eine Teilnehmerstation für ein Bussystem und ein Verfahren zur Verbesserung der Sendequalität in einem Bussystem, bei welchen eine mögliche Asymmetrie zwischen gesendeten Bits reduziert wird.

### Stand der Technik

Für die Kommunikation zwischen Sensoren und Steuergeräten hat das CAN-Bussystem eine weite Verbreitung gefunden. Beim CAN-Bussystem werden Nachrichten mittels des CAN-Protokolls übertragen, wie es in der CAN-Spezifikation in der ISO11898 beschrieben ist.

DE10 000 305 A1 beschreibt das CAN (Controller Area Network) sowie eine als TTCAN (Time Trigger CAN = zeit-getriggertes CAN) bezeichnete Erweiterung des CAN. Das beim CAN verwendete Medienzugriffssteuerverfahren beruht auf einer bitweisen Arbitrierung. Bei CAN wird die bitweise Arbitrierung anhand eines führenden Identifiers innerhalb der über den Bus zu übertragenden Nachricht vorgenommen.

Wie bereits in der DE 10 2012 200 997 beschrieben, können bei der bitweisen Arbitrierung anfänglich mehrere Teilnehmerstationen gleichzeitig Daten über das Bussystem übertragen, ohne dass hierdurch die Datenübertragung gestört wird.

Die Offenlegungsschrift WO 2006/043229 A1 beschreibt ein Verfahren, um Veränderungen im Tastverhältnis eines digitalen CAN Sendesignals auszuregeln. Dazu erzeugt eine Sender-Steuerschaltung Steuersignale, um die Ausgangstreiberschaltungen abhängig von der gemessenen Ausgangsspannung in geeigneter Weise anzusteuern, um unterschiedliche Busbelastungen zu berücksichtigen.

Das Dokument EP 0 858 195 A2 beschreibt eine Sendeausgangsschaltung für einen CAN-Transceiver, welche durch ein Filter und zwei geeignet ausgelegte Verstärker die abgestrahlte Leistung minimiert.

Bei dem CAN-Protokoll ist die Bitrate in Arbitrierungs- und Datenfeld gleich, so dass gilt Bitrate_arb = Bitrate_data. Die maximale Bitrate beträgt 1 Mbps (Mega Bit pro Sekunde), d. h. die Bitzeit ist 1µs.

Das CAN-Protokoll wurde unter dem Namen CAN-FD weiterentwickelt, gemäß welchem Nachrichten entsprechend Spezifikation "CAN with Flexible Data-Rate, Specification Version 1.0" (Quelle http://www.semiconductors.bosch.de) übertragen werden. Mit CAN-FD ist eine Erhöhung der Datenrate für Systeme möglich, bei welchen die Datenrate bisher durch die Buslänge der Systeme begrenzt war.

Bei CAN-FD wird im Vergleich zum klassischen CAN am Ende der Arbitrationsphase die Bitrate für die folgende Datenphase auf z. B. 2 Mbps, 4 Mbps, 8 Mbps erhöht, so dass gilt Bitrate_arb < Bitrate_data. Für die physikalische Schicht (Physical Layer) einer Sende-/Empfangseinrichtung bzw. eines Transceivers einer Teilnehmerstation eines CAN-FD-Bussystems ist die Bitsymmetrie ein wichtiger Parameter zur fehlerfreien Übertragung.

Bei der Übertragung der Signale auf dem Bussystem wird je nach zu übertragenden Daten zwischen einem hohen und einem niedrigen Signalzustand oder umgekehrt geschaltet, wobei in Bezug auf ein Sendesignal TX und ein Empfangssignal RX der niedrige Signalzustand auch als Dominantzustand und der hohe Signalzustand auch als Rezessivzustand bezeichnet wird. Hierbei ist ein auf dem Bus übertragenes Signal, das Bussignal, gegenüber dem Sendesignal TX einer Teilnehmerstation des Bussystems verzögert. Zudem ist das Empfangssignal RX bei einer weiteren Teilnehmerstation des Bussystems gegenüber dem Bussignal verzögert, das sich aufgrund des Sendesignals TX ergibt.

Die Bitsymmetrie Bitsym kann definiert werden als Bitsym = t_tx - t_rx, wobei t_tx die Bitdauer am TX-Eingang des Transceivers der sendenden Teilnehmerstation ist und t_rx die Bitdauer am RX-Ausgang des Transceivers derselben Teilnehmerstation ist. Die ideale Bitsymmetrie ist 0, so dass t_rx = t_tx gilt. Dies gilt für beide Zustände, also den rezessiven und dominanten Zustand.

Bei zu geringer Bitsymmetrie (Dominantphase zu lang) ist eine Kommunikation nicht mehr möglich, da die am Anschluss für das Empfangssignal RX ermittelten Rezessiv-Bits so kurz sind, dass vom CAN-Protocol Controller kein Sample-Punkt mehr gesetzt werden kann. Das Gleiche gilt, wenn die Rezessivphase zu lang ist, wodurch die Dominantphase zu kurz wird.

Die Bitsymmetrie ist unabhängig von der Bitrate. Eine schlechte Bitsymmetrie wirkt sich jedoch bei höherer Bitrate stärker aus. Bei 500 kbps (500 Kilo Bit pro Sekunde) haben die Zustandswechsel, die auch Schaltzeiten genannt werden, einen wesentlich geringeren Einfluss auf die gesamte Bitzeit als bei z. B. 8 Mbps. Bei hohen Bitraten wird außerdem relevant, dass die Schaltzeit bzw. Flanke von dominant zu rezessiv (dom => rec) länger ist als die der Schaltzeit bzw. Flanke von dominant zu rezessiv (dom => rec), da der Rezessivzustand bestimmt durch den ISO-Standard, nicht aktiv getrieben werden kann. Somit tritt eine Bitasymmetrie auf. Dominante Bits werden länger, rezessive Bits werden kürzer.

Der Parameter der Bitsymmetrie wurde kürzlich in der CiA-CANFD-Interest-Group (Spec 601-1) eingeführt, wobei gilt dass die Zeit t_rec für ein rezessives Bit bei 2 Mbps im Bereich von t_rec = 400...550 ns liegen darf und bei 5 Mbps im Bereich von t_rec = 120...220 ns liegen darf. Hierbei gilt, dass der Leitungswiderstand RL einen Wert von 60 Ohm hat, die Leitungskapazität CL einen Wert von 100 pF hat und die Kapazität CRXD, welche die Lastkapazität ist, welche am RXD-Anschluss oder RXD-Pin anliegt und beispielsweise einen Wert von 15 pF hat.

Problematisch ist also, dass sich eine fehlende Bitsymmetrie mit steigender Bitrate stärker auswirkt. Wird die für das Signal geforderte Bitsymmetrie nicht eingehalten, kommt es im Bussystem zu fehlerhaften Übertragungen.

### Offenbarung der Erfindung

Daher ist es Aufgabe der vorliegenden Erfindung, eine Teilnehmerstation für ein Bussystem und ein Verfahren zur Verbesserung der Sendequalität in einem Bussystem bereitzustellen, welche die zuvor genannten Probleme lösen. Insbesondere sollen eine Teilnehmerstation für ein Bussystem und ein Verfahren zur Verbesserung der Sendequalität in einem Bussystem bereitgestellt werden, bei welchen die Anforderungen an die Bitsymmetrie eines im Bussystem empfangenen Signals erfüllt werden, so dass keine fehlerhaften Übertragungen auftreten.

Die Aufgabe wird durch eine Teilnehmerstation für ein Bussystem nach Anspruch 1 gelöst. Die Teilnehmerstation umfasst eine Sende-/Empfangseinrichtung zum Senden oder Empfangen einer Nachricht an/von mindestens einer weiteren Teilnehmerstation des Bussystems über das Bussystem, bei welchem Bussystem zumindest zeitweise ein exklusiver, kollisionsfreier Zugriff einer Teilnehmerstation auf einen Bus des Bussystems gewährleistet ist, wobei die Sende-/Empfangseinrichtung eine Sendesignalbearbeitungseinrichtung zur Sendesignalbearbeitung eines von der Sende-/Empfangseinrichtung zu sendenden Sendesignals aufweist, und wobei die Sendesignalbearbeitungseinrichtung zur Einstellung einer vorbestimmten Bitsymmetrie von Bits des Sendesignals durch Erzeugung eines internen Sendesignals für die Nachricht ausgestaltet ist, wobei bei dem internen Sendesignal die Dominantphase der Bits verkürzt und die Rezessivphase von Bits verlängert ist.

Mit der Teilnehmerstation ist eine bessere Bitsymmetrie in CAN_H und CAN_L des Bussystems möglich. Dadurch werden fehlerhafte Übertragungen zwischen Teilnehmerstationen des Bussystems verhindert bzw. Systemanwendungen mit CAN-FD ermöglicht. Die höhere Bitsymmetrie schafft Spielraum für die Dimensionierung der Bustopologie.

Vorteilhafte weitere Ausgestaltungen der Teilnehmerstation sind in den abhängigen Ansprüchen beschrieben.

Möglicherweise ist die Sendesignalbearbeitungseinrichtung zur Verzögerung der fallenden Flanke eines Bits in dem internen Sendesignal ausgestaltet, so dass die Dominantphase der Bits verkürzt und die Rezessivphase von Bits verlängert ist.

Die Sendesignalbearbeitungseinrichtung kann auch ausgestaltet sein, eine Zeit zur Verzögerung der fallenden Flanke eines Bits in dem internen Sendesignal abhängig von einem Ergebnis einer Messung der Bitsymmetrie auszuführen.

Es ist auch möglich, dass die Sendesignalbearbeitungseinrichtung ausgestaltet ist eine Sendesignalbearbeitung nur auszuführen, wenn die Teilnehmerstation selbst Sender ist.

Gemäß einem Ausführungsbeispiel ist die Sendesignalbearbeitungseinrichtung zum Ein- oder Ausschalten einer Sendesignalbearbeitung abhängig von der Arbitrationsphase und des Datenbereichs der Nachricht ausgestaltet. Hierbei kann die Sendesignalbearbeitungseinrichtung ausgestaltet sein, eine Sendesignalbearbeitung nur für den Datenbereich auszuführen.

Die Sende-/Empfangseinrichtung kann zudem Sendestufen für Busadern CAN_H und CAN_L des Busses aufweisen, wobei die Sendesignalbearbeitungseinrichtung zur Modifikation der Sendestufen für CAN_H und CAN_L ausgestaltet ist, so dass die Sendestufen für CAN_H und CAN_L den Zustandswechsel von dominant zu rezessiv im Datenbereich aktiv treiben.

Außerdem kann die Teilnehmerstation zudem eine Kommunikationssteuereinrichtung zur Steuerung der Kommunikation im Bussystem aufweisen, wobei die Kommunikationssteuereinrichtung oder die Sende-/Empfangseinrichtung zur Erfassung eines Datenbereichs ausgestaltet sind.

Die zuvor beschriebene Teilnehmerstation kann Teil eines Bussystems sein, das einen Bus und mindestens zwei Teilnehmerstationen aufweist, welche über den Bus derart miteinander verbunden sind, dass sie miteinander kommunizieren können, wobei mindestens eine der mindestens zwei Teilnehmerstationen eine zuvor beschriebene Teilnehmerstation ist.

Die zuvor genannte Aufgabe wird zudem durch ein Verfahren zur Verbesserung der Sendequalität in einem Bussystem nach Anspruch 10 gelöst. In dem Bussystem ist zumindest zeitweise ein exklusiver, kollisionsfreier Zugriff einer Teilnehmerstation auf einen Bus des Bussystems gewährleistet ist Das Verfahren umfasst die Schritte: Bearbeiten, mit einer Sendesignalbearbeitungseinrichtung einer Sende-/Empfangseinrichtung der Teilnehmerstation, eines von der Sende-/Empfangseinrichtung zu sendenden Sendesignals, indem eine vorbestimmte Bitsymmetrie von Bits des Sendesignals durch Erzeugung eines internen Sendesignals eingestellt wird, bei welchem die Dominantphase der Bits verkürzt und die Rezessivphase von Bits verlängert ist, und Senden, mit der Sende-/Empfangseinrichtung, des internen Sendesignals als Nachricht an mindestens eine weitere Teilnehmerstation des Bussystems über das Bussystem.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Blockschaltbild einer Sende-/Empfangseinrichtung einer Teilnehmerstation des Bussystems gemäß dem ersten Ausführungsbeispiel;
Fig. 3 ein Schaubild zur Veranschaulichung des Aufbaus einer Nachricht, die von einer Teilnehmerstation des Bussystems gemäß dem ersten Ausführungsbeispiel gesendet wird;
Fig. 4 einen Spannungsverlauf eines Sendesignals über der Zeit, wie es von einer Teilnehmerstation des Bussystems gemäß dem ersten Ausführungsbeispiel gesendet werden kann;
Fig. 5 einen Spannungsverlauf eines Empfangssignals über der Zeit, wie es von einer Teilnehmerstation des Bussystems gemäß dem ersten Ausführungsbeispiel empfangen wird;
Fig. 6 einen Spannungsverlauf eines Sendesignals über der Zeit, wie es von einer Sende-Empfangseinrichtung gemäß dem ersten Ausführungsbeispiel zum Senden empfangen wird;
Fig. 7 einen Spannungsverlauf eines internen Sendesignals über der Zeit, wie es von einer Sende-Empfangseinrichtung gemäß dem ersten Ausführungsbeispiel erzeugt wird;
Fig. 8 einen Spannungsverlauf eines Empfangssignals über der Zeit, wie es von einer Teilnehmerstation des Bussystems gemäß dem ersten Ausführungsbeispiel empfangen wird;
Fig. 9 ein Blockschaltbild einer Sendesignalbearbeitungseinrichtung gemäß dem ersten Ausführungsbeispiel;
Fig. 10 ein Flussdiagramm eines Verfahrens zur Verbesserung der Empfangsqualität in dem Bussystem gemäß dem ersten Ausführungsbeispiel;
Fig. 11 ein Flussdiagramm eines Verfahrens zur Verbesserung der Empfangsqualität in dem Bussystem gemäß einem zweiten Ausführungsbeispiel; und
Fig. 12 ein Flussdiagramm eines Verfahrens zur Verbesserung der Empfangsqualität in dem Bussystem gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

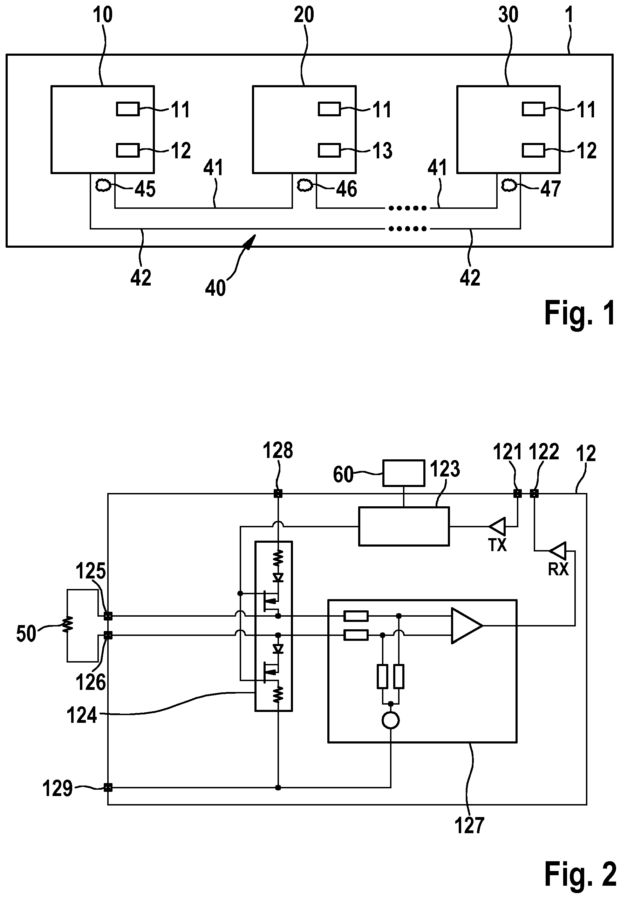

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstationen 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Kommunikationssteuereinrichtung 11 kann wie ein herkömmlicher CAN-Controller ausgeführt sein.

Die Sende-/Empfangseinrichtung 13 der Teilnehmerstationen 20 dient zum Senden der Nachrichten 46 in Form eines Sendesignals TX an eine andere Teilnehmerstation des Bussystems 1 und zum Empfangen der Nachrichten 45, 47 der anderen Teilnehmerstationen des Bussystems 1 in Form eines Empfangssignals RX. Die Sende-/Empfangseinrichtung 13 kann wie ein herkömmlicher CAN-Transceiver ausgeführt sein.

Fig. 2 zeigt den Aufbau der Sende-/Empfangseinrichtung 12 in diesem Zusammenhang. Die Sende-/Empfangseinrichtung 12 ist an ihren Anschlüssen 121, 122 mit der Kommunikationssteuereinrichtung 11 verbunden. Hierbei dient der Anschluss 121 zur Eingabe des Sendesignals TX von der Kommunikationssteuereinrichtung 11 in die Sende-/Empfangseinrichtung 12 zum Senden auf den Bus 40. Der Anschluss 122 dient zur Weiterleitung des von der Sende-/Empfangseinrichtung 12 vom Bus 40 empfangenen Empfangssignals RX an die Kommunikationssteuereinrichtung 11. In dem Pfad des Sendesignals TX hat die Sende-/Empfangseinrichtung 12 eine Sendesignalbearbeitungseinrichtung 123 zur Bearbeitung des Sendesignals TX, bevor das Sendesignal TX an eine Sendestufeneinheit 124 für die Sendestufen der Busadern CAN_H und CAN_L weitergegeben wird. Die Busader CAN_H ist an einen Anschluss 125 der Sende-/Empfangseinrichtung 12 angeschlossen. Die Busader CAN_L ist an einen Anschluss 126 der Sende-/Empfangseinrichtung 12 angeschlossen. Das Empfangssignal RX wird von den Anschlüssen 125, 126 einer Empfangssignalbearbeitungseinrichtung 127 zugeführt, bevor es über den Anschluss 122 an die Kommunikationssteuereinrichtung 11 weitergeleitet wird. An einem Anschluss 128 der Sende-/Empfangseinrichtung 12 ist die Sendestufeneinheit 124 an eine Spannung VCC5 für die Sendestufeneinheit 124 angeschlossen. Die Sendestufeneinheit 124 und die Empfangssignalbearbeitungseinrichtung 127 sind über einen Anschluss 129 mit Masse verbunden und somit geerdet. Mit Hilfe eines Widerstands 50 eines Auskoppelnetzwerks können die Übertragungscharakteristika an den Anschlüssen 125, 126 gemessen werden. Der Widerstand 50 hat typischerweise einen Wert von 60 Ohm. Die Sendesignalbearbeitungseinrichtung 123 ist von einer externen Einrichtung 60 konfigurierbar.

Demgegenüber weist die Sende-/Empfangseinrichtung 13 keine Sendesignalbearbeitungseinrichtung 123 auf und ist daher beispielsweise wie ein herkömmlicher CAN-Transceiver ausgeführt.

Somit kommuniziert die Sende-/Empfangseinrichtung 12 gemäß dem CAN-Protokoll wohingegen die Empfangseinrichtung 13 gemäß dem CAN-Protokoll oder dem CAN-FD-Protokoll kommunizieren kann.

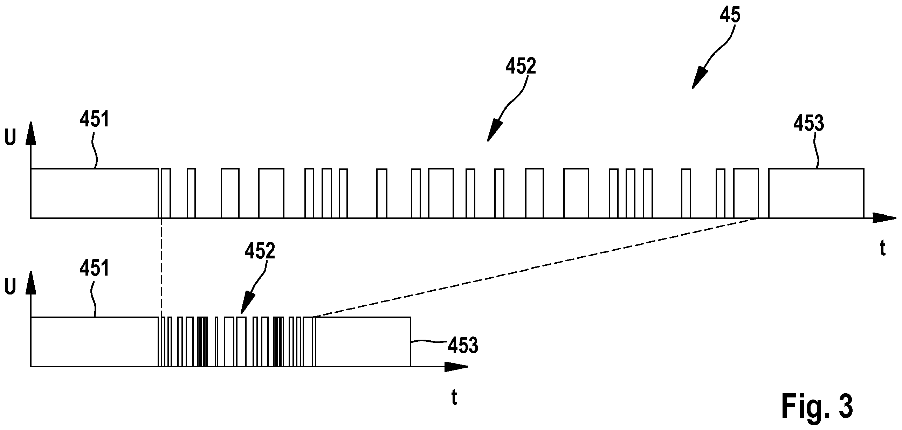

Fig. 3 zeigt in ihrem oberen Teil anhand der Nachricht 45 einen CAN-Rahmen, wie er von der Sende-/Empfangseinrichtung 12 oder der Sende-/Empfangseinrichtung 13 gesendet wird, und in ihrem unteren Teil einen CAN-FD-Rahmen, wie er von der Sende-/Empfangseinrichtung 12 gesendet werden kann. Der CAN-Rahmen und der CAN-FD-Rahmen sind für die CAN-Kommunikation auf dem Bus 40 grundlegend in zwei unterschiedliche Phasen unterteilt, nämlich die Arbitrationsphasen 451, 453 und einen Datenbereich 452, der bei CAN-HS auch Datenfeld bzw. bei CAN-FD auch Datenphase genannt wird. Bei CAN-FD wird im Vergleich zum klassischen CAN am Ende der Arbitrationsphase 451 die Bitrate für die folgende Datenphase auf z. B. 2, 4, 8Mbps erhöht. Damit gilt, dass bei CAN-FD die Bitrate in den Arbitrationsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt.

Bei der Kommunikation im Bussystem 1 kann eine Bitasymmetrie zum einen auftreten, da die Lage der Empfangsschwelle laut ISO11898-2 bei typischerweise 0,7 V und damit nicht mittig in der typischen Bus-Differenzspannung von 2 V liegt. Zum anderen ergibt sich eine Bitasymmetrie daraus, dass das CAN-Protokoll dominante und rezessive Zustände erfordert, wobei der Zustandswechsel von rezessiv zu dominant (rec => dom) von den Sendestufen CAN_H und CAN_L aktiv getrieben wird, wohingegen der Zustandswechsel von dominant zu rezessiv (dom => rec) Großteils von der Busbeschaffenheit, wie Widerstände und Kapazitäten, bestimmt wird.

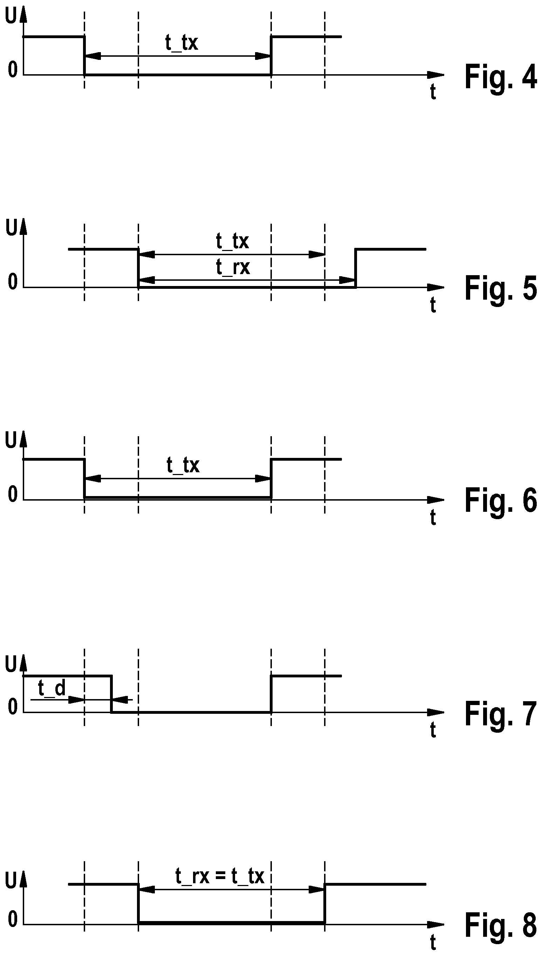

Fig. 4 und Fig. 5 zeigen das Ergebnis eines Sendens einer Nachricht 45 als CAN-Rahmen oder CAN-FD-Rahmen mit der Sende-/Empfangseinrichtung 12 für den Fall, bei dem in der Sende-/Empfangseinrichtung 12 keine Korrektur des Sendesignals TX vorgenommen wird. Das Sendesignal TX ist in Fig. 4 als Zeitverlaufsdiagramm für die Spannung U über der Zeit t dargestellt. Hierbei hat das Sendesignal TX zeitlich gesehen zuerst eine Rezessivphase, dann eine Dominantphase und danach wieder eine Rezessivphase. Die Dominant- und/oder die Rezessivphase kann ein oder mehrere Bits umfassen. Fig. 5 zeigt das daraus resultierende Empfangssignal RX als Zeitverlaufsdiagramm für die Spannung U über der Zeit t. Hierbei wird eine Zeit t_tx, in welcher das Sendesignal TX den dominanten Pegel hat, im Empfangssignal RX auf eine Zeit t_rx verlängert.

Demgegenüber zeigen Fig. 6 bis Fig. 8 das Ergebnis eines Sendens einer Nachricht 45 als CAN-Rahmen oder CAN-FD-Rahmen mit der Sende-/Empfangseinrichtung 12 für den Fall, bei dem in der Sende-/Empfangseinrichtung 12 eine Korrektur des Sendesignals TX vorgenommen wird, wie nachfolgend beschrieben. Hierbei zeigt Fig. 6 das Sendesignal TX als Zeitverlaufsdiagramm für die Spannung U über der Zeit t. Das Sendesignal TX hat zeitlich gesehen zuerst eine Rezessivphase, dann eine Dominantphase und danach wieder eine Rezessivphase. Die Dominant- und/oder die Rezessivphase kann ein oder mehrere Bits umfassen. Fig. 7 zeigt das in der Sende-/Empfangseinrichtung 12 intern erzeugte Sendesignal TX_intern als Zeitverlaufsdiagramm für die Spannung U über der Zeit t. Fig. 8 zeigt das daraus resultierende Empfangssignal RX als Zeitverlaufsdiagramm für die Spannung U über der Zeit t. Hierbei wird das in der Sende-/Empfangseinrichtung 13 intern erzeugte Sendesignal TX_intern mit Hilfe der Sendesignalbearbeitungseinrichtung 123 bezüglich der fallenden Flanke des Sendesignals TX um eine Verzögerungszeit t_d verzögert. Dadurch wird die Zeit t_rx, in welcher das Empfangssignal RX aufgrund des Sendesignals TX den dominanten Pegel hat, im Empfangssignal RX verkürzt, so dass t_rx = t_tx gilt.

Mit anderen Worten, das am TX-Anschluss (TX-Pin) der Sende-/Empfangseinrichtung 12 ankommende Signal wird von der Sendesignalbearbeitungseinrichtung 123 bezüglich der fallenden Flanke um die Zeit t_d verzögert. Somit wird die Dominantphase von Bits des am TX-Anschluss der Sende-/Empfangseinrichtung 12 ankommenden Signals verkürzt. Entsprechend wird die Rezessivphase von Bits des am TX-Anschluss der Sende-/Empfangseinrichtung 12 ankommenden Signals verlängert.

Mit diesem von der Sendesignalbearbeitungseinrichtung 123 durchgeführten Verfahren kann die ideale Bitsymmetrie für das Empfangssignal RX eingestellt werden.

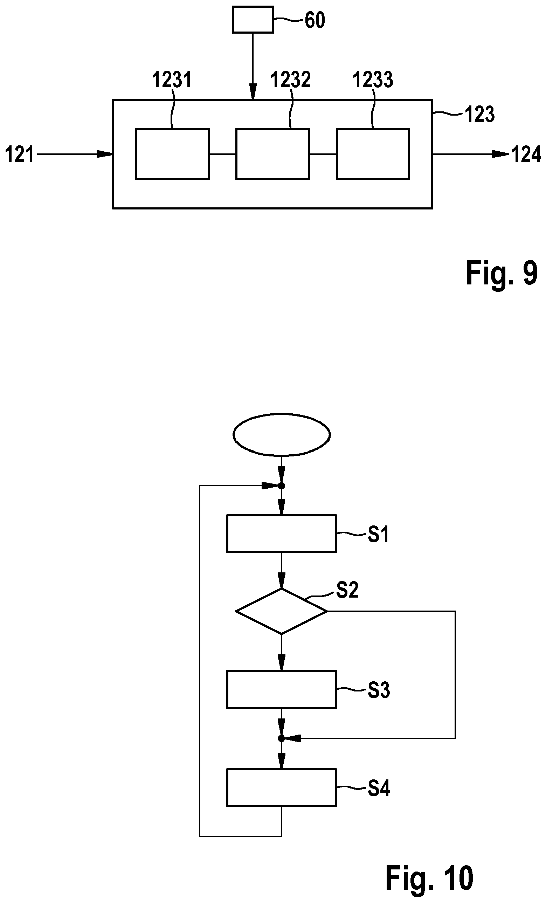

Fig. 9 zeigt eine mögliche Ausführung der Sendesignalbearbeitungseinrichtung 123. Demzufolge kann die Sendesignalbearbeitungseinrichtung 123 eine Erfassungseinheit 1231, eine Auswerteeinheit 1232 und ein Zeitglied 1233 aufweisen. Die Sendesignalbearbeitungseinrichtung 123 kann ein Verfahren zur Verbesserung der Empfangsqualität in dem Bussystem 1 ausführen, das in Fig. 10 veranschaulicht ist.

Gemäß Fig. 10 wird nach dem Beginn des Verfahrens bei einem Schritt S1 mit der Erfassungseinheit 1231 das Sendesignal TX erfasst und das Ergebnis der Erfassung der Auswerteeinheit 1232 zugeführt. Danach geht der Fluss zu einem Schritt S2 weiter.

Bei dem Schritt S2 wertet die Auswerteeinheit 1232 aus, ob die Erfassungseinheit 1231 eine fallende Flanke des Sendesignals TX erfasst hat oder nicht. Wurde eine fallende Flanke des Sendesignals TX erfasst, geht der Fluss zu einem Schritt S3 weiter. Ansonsten geht der Fluss zu einem Schritt S4 weiter.

Bei dem Schritt S3 kommt das Zeitglied 1233 zum Einsatz und verzögert die fallende Flanke des Sendesignals TX um die Verzögerungszeit t_d, wie in Fig. 6 und Fig. 7 veranschaulicht. Die Verzögerungszeit t_d kann von der externen Einrichtung 60 eingestellt sein. Dies kann beim Konfigurieren der Sendesignalbearbeitungseinrichtung 123 mit der externen Einrichtung 60 vorgenommen werden. Danach geht der Fluss zu dem Schritt S4 weiter.

Bei dem Schritt S4 wird das Sendesignal TX_intern an die Sendestufeneinheit 124 der Sende-/Empfangseinrichtung 12 weitergeleitet und somit auf den Bus 40 eingekoppelt. Danach geht der Fluss zu dem Schritt S1 zurück.

Das Verfahren ist beendet, wenn die Sendesignalbearbeitungseinrichtung 123 und/oder die Sende-/Empfangseinrichtung 12 und/oder die Teilnehmerstation 10, 30 ausgeschaltet ist.

Somit ist die Sende-/Empfangseinrichtung 12 in der Lage, eine Bitasymmetrie im Empfangssignal RX auszugleichen und die ideale Bitsymmetrie herzustellen.

Mit der Sendesignalbearbeitungseinrichtung 123 sollte sichergestellt sein, dass die Obergrenze der Propagation Delay Time aus der Norm ISO11898-2 nicht überschritten wird. Beispielsweise kann bei der Sende-/Empfangseinrichtung 13 die maximale Propagation Delay Time über Temperatur und mehrere Teile einen Wert von 200 ns haben. Wird bei der Sende-/Empfangseinrichtung 12 dann eine Verzögerungszeit t_d mit einem Wert von 35 ns benötigt, um die ideale Bitsymmetrie einzustellen, liegt die Propagation Delay Time der Sende-/Empfangseinrichtung 12 bei 235ns. Dies ist kleiner als die maximale Propagation Delay Time aus der ISO11898-2, die bei einem Wert von 255ns liegt, so dass die Forderung der ISO11898-2 erfüllt ist.

In einer vorteilhaften Modifikation des vorliegenden Ausführungsbeispiels ist die Verzögerungszeit t_d nicht fest eingestellt sondern wird abhängig von einer Messung der Bitsymmetrie geregelt oder eingestellt. Dadurch kann immer die ideale Bitsymmetrie erzielt werden. Die Messung kann von der Sende-/Empfangseinrichtung 12 oder der externen Einrichtung 60 ausgeführt werden.

Das von der Sende-/Empfangseinrichtung 12 in der Sendesignalbearbeitungseinrichtung 123 durchgeführte Verfahren ermöglicht erst eine CAN-FD-Systemauslegung für heutige Topologien. Das von der Sende-/Empfangseinrichtung 12 in der Sendesignalbearbeitungseinrichtung 123 durchgeführte Verfahren ist anwendbar für CAN-HS und CAN-FD. Zudem ist es vorteilhaft, dass das von der Sende-/Empfangseinrichtung 12 in der Sendesignalbearbeitungseinrichtung 123 durchgeführte Verfahren unabhängig von bestimmten Kommunikationsphasen auf dem Bus 40 ist.

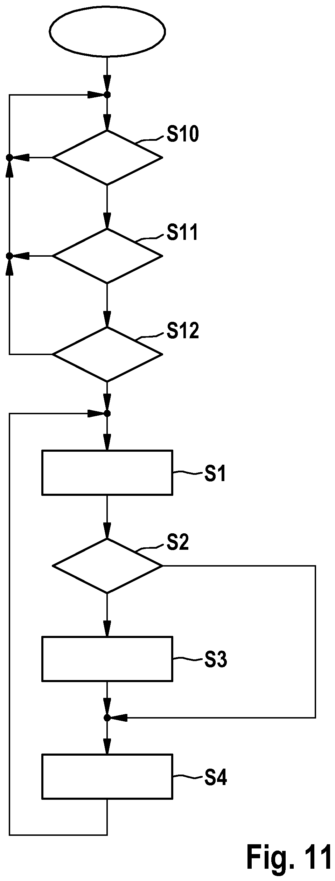

Fig. 11 veranschaulicht ein Verfahren gemäß einem zweiten Ausführungsbeispiel. Hierbei führt die Sendesignalbearbeitungseinrichtung 123 wieder das Verfahren zur Verbesserung der Empfangsqualität in dem Bussystem 1 aus, wie in Bezug auf das erste Ausführungsbeispiel beschrieben. Gemäß dem vorliegenden Ausführungsbeispiel führt die Sendesignalbearbeitungseinrichtung 123 jedoch zusätzlich die Schritte S10, S11, S12 aus.

Bei dem Schritt S10 erfasst die Sendesignalbearbeitungseinrichtung 123, beispielsweise ebenfalls mit der Erfassungseinheit 1231, ob die Sende-/Empfangseinrichtung 12 selbst Sender ist. Hierfür kann die Sendesignalbearbeitungseinrichtung 123 die fallenden Flanken des an der Sende-/Empfangseinrichtung 1200 von der Kommunikationssteuereinrichtung 11 ankommenden Sendesignals TX beobachten. Die Sendesignalbearbeitungseinrichtung 123 beurteilt anhand der gezählten fallenden Flanken des Sendesignals TX, ob die Sende-/Empfangseinrichtung 12 als Sender in dem Datenbereich 452 agiert. Demzufolge umfasst die Erfassungseinheit 1231 einen Zähler, der insbesondere als 5-Bit-Zähler ausgestaltet ist. Die fallenden Flanken des Sendesignals TX dienen als Takteingang der Erfassungseinheit 1231 bzw. des Zählers. Alternativ kann der Zähler auch die steigenden Flanken des Sendesignals TX zählen. Hierbei wird genutzt, dass in den Arbitrationsphasen 451, 453 maximal 35 Bits (ohne Stuffbits) gesendet werden, d. h. es treten max. 17 fallende Flanken auf. Die können z. B. durch Verwendung eines 5-Bit-Zählers erfasst werden. Das Rücksetzen des Zählers kann über ein Zeitglied erfolgen. Die Bitrate der Arbitrationsphasen 451,453 wird der Erfassungseinheit 1231 übermittelt. Das Zeitglied beträgt typischerweise 8 Bits. Das Zeitglied kann jedoch auch mindestens 6 und maximal 11 Bits betragen. Die Wahl des Zeitglieds richtet sich nach dem jeweils verwendeten Datenübertragungsprotokoll des Bussystems.

Ist die Sende-/Empfangseinrichtung 12 selbst Sender, geht der Fluss zu einem Schritt S11 weiter. Andernfalls geht der Fluss zu dem Schritt S10 zurück.

Bei dem Schritt S11 erfasst die Sendesignalbearbeitungseinrichtung 123, beispielsweise ebenfalls mit der Erfassungseinheit 1231, ob eine für die Sendesignalbearbeitung mit der Sendesignalbearbeitungseinrichtung 123 geeignete Phase während der CAN-Kommunikation erfasst ist. Geeignete Phasen oder Bereiche für eine Sendesignalbearbeitung mit der Sendesignalbearbeitungseinrichtung 123 sind immer dann, wenn sichergestellt ist, dass die Teilnehmerstation 10, 30 selbst sendet und keine andere Teilnehmerstation des Bussystems 1 sendet. Dies ist bei CAN und CAN-FD der Fall in dem Datenbereich 452 von Fig. 2. Die Erkennung des Endes der Arbitrationsphase 451, 453 oder des Anfangs des Datenbereichs 452 mit der Erfassungseinrichtung 127 kann bereits aus dem Ergebnis von Schritt S10 geschlossen werden. Alternativ oder zusätzlich kann die Erkennung des Endes der Arbitrationsphase 451, 453 oder des Anfangs des Datenbereichs 452 über ein BRS-Bit erfolgen, das am Ende der Arbitrationsphasen 451, 453 vorhanden ist. Hierbei ist die Sende-/Empfangseinrichtung 12 in der Lage, das im Datenbereich 452 verwendete Datenübertragungsprotokoll zu dekodieren. Somit ist die Sende-/Empfangseinrichtung 12 ein teilnetzwerkender Transceiver (Partial-Networking-Transceiver). Hat die Sendesignalbearbeitungseinrichtung 123 den Datenbereich 452 erfasst, geht der Fluss zu einem Schritt S12 weiter. Andernfalls geht der Fluss zu dem Schritt S10 zurück.

Bei dem Schritt S12 misst die Sendesignalbearbeitungseinrichtung 123, beispielsweise mit Hilfe der Erfassungseinheit 1231, die Bitsymmetrie von CAN_H und CAN_L. Hierbei wird die Bitrate in dem Datenbereich 453 ermittelt. Liegt eine zu große Bitasymmetrie vor, geht der Fluss zu dem Schritt S1 weiter, so dass eine Sendesignalbearbeitung durchgeführt wird, wie beim ersten Ausführungsbeispiel in Bezug auf Fig. 9 und Fig. 10 beschrieben. Andernfalls geht der Fluss zu dem Schritt S10 zurück.

Die Sendesignalbearbeitung mit der Sendesignalbearbeitungseinrichtung 123 beginnt bei Erkennung des Datenbereichs 452. Am Ende des Datenbereichs 452 endet die Sendesignalbearbeitung mit der Sendesignalbearbeitungseinrichtung 123. Dabei werden die verwendeten Einstellungen gespeichert und bleiben solange erhalten, bis die Sendesignalbearbeitungseinrichtung 123 den nächsten Datenbereich 452 oder das Ende einer Arbitrationsphase 451, 453 erfasst und somit erkennt. Damit kann das von der Sendesignalbearbeitungseinrichtung 123 durchgeführte Verfahren mit den Schritten S1 bis S4 abhängig von der Arbitrationsphase 451; 453 und des Datenbereichs 452 der Nachricht 45 oder der Nachrichten 46; 47 ein- oder ausgeschaltet werden.

Die Sende-/Empfangseinrichtung 12 gemäß dem vorliegenden Ausführungsbeispiel ist besonders kostengünstig realisierbar, wenn ein in die Sende-/Empfangseinrichtung 12 integrierter Protokoll-Controller für die Partial-Network-Funktion vorhanden ist und zum Erkennen von u. a. des BRS-Bits am Ende der Arbitrierung verwendbar ist. Hierbei sollte der Protokoll-Controller von einem ausreichend genauen Takt betrieben werden.

Gemäß einer Modifikation des vorliegenden Ausführungsbeispiels erfolgt die Erkennung des Datenbereichs 452 mit einem CAN-Modul der Kommunikationssteuereinrichtung 11 als externe Einrichtung 60. Das CAN-Modul der Kommunikationssteuereinrichtung 11 gibt das Ergebnis der Erkennung mit Hilfe eines Schaltsignals S an die Sende-/Empfangseinrichtung 12 aus. Das Schaltsignal S signalisiert den Datenbereich 452. In diesem Fall haben die Sende-/Empfangseinrichtung 120 und die Kommunikationssteuereinrichtung 11 jeweils einen zusätzlichen Pin für die Übertragung des Schaltsignals S. Dies ist kostengünstiger als die Lösung gemäß welcher ein in die Sende-/Empfangseinrichtung 12 integrierter Protokoll-Controller erforderlich ist, welcher u. a. das BRS-Bit am Ende der Arbitration erkennt und von einem ausreichend genauen Takt betrieben werden sollte.

Gemäß einer weiteren Modifikation des vorliegenden Ausführungsbeispiels können die Schritte S10 bis S12 auch von einer oder mehreren anderen Einrichtungen der Sende-/Empfangseinrichtung 12 oder auch der externen Einrichtung 60 ausgeführt werden.

Auch das von der Sende-/Empfangseinrichtung 12 in der Sendesignalbearbeitungseinrichtung 123 durchgeführte Verfahren gemäß Fig. 11 und/oder seinen Modifikationen ermöglicht erst eine CAN-FD-Systemauslegung für heutige Topologien. Auch das von der Sende-/Empfangseinrichtung 12 in der Sendesignalbearbeitungseinrichtung 123 durchgeführte Verfahren gemäß Fig. 11 und/oder seinen Modifikationen ist anwendbar für CAN-HS und CAN-FD. Zudem ist es vorteilhaft, dass das von der Sende-/Empfangseinrichtung 12 in der Sendesignalbearbeitungseinrichtung 123 durchgeführte Verfahren gemäß Fig. 11 und/oder seinen Modifikationen unabhängig von bestimmten Kommunikationsphasen auf dem Bus 40 ist.

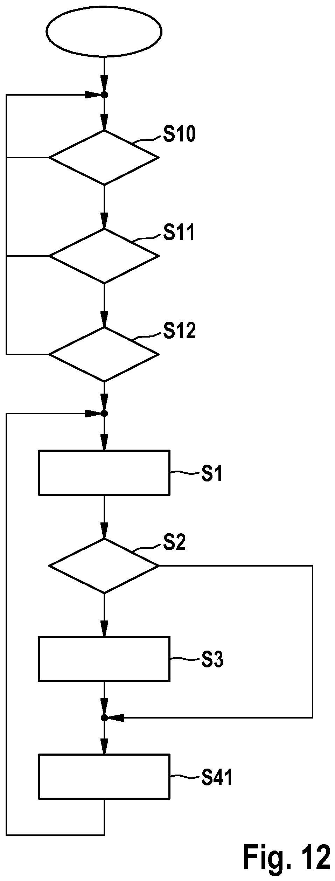

Fig. 12 veranschaulicht ein Verfahren gemäß einem dritten Ausführungsbeispiel. Hierbei führt die Sendesignalbearbeitungseinrichtung 123 wieder das Verfahren zur Verbesserung der Empfangsqualität in dem Bussystem 1 aus, wie in Bezug auf das zweite Ausführungsbeispiel beschrieben. Jedoch wird hier anstelle des Schritts S4 ein Schritt S41 ausgeführt.

Bei dem Schritt S41 modifiziert die Sendesignalbearbeitungseinrichtung 123 nach Erkennen des Datenbereichs 453 für die Bits des Datenbereichs 453 die Sendestufen für die Busadern CAN_H und CAN_L der Sendestufeneinheit 124 derart, dass auch der Zustandswechsel von dominant zu rezessiv (dom => rec) von den Sendestufen CAN_H und CAN_L der Sendestufeneinheit 124 aktiv getrieben wird. Da dies nur im Datenbereich 453 geschieht, wird vermieden, dass verschiedene Sende-/Empfangseinrichtung 12, 13 des Bussystems 1 gegeneinander treiben.

Auch bei dem Schritt S41 wird durch die modifizierte Sendestufeneinheit 124 bewirkt, dass die Dominantphase von Bits des am TX-Anschluss der Sende-/Empfangseinrichtung 12 ankommenden Signals verkürzt wird und die Rezessivphase von Bits des am TX-Anschluss der Sende-/Empfangseinrichtung 12 ankommenden Signals entsprechend verlängert wird.

Auch das von der Sende-/Empfangseinrichtung 12 in der Sendesignalbearbeitungseinrichtung 123 durchgeführte Verfahren gemäß Fig. 12 ermöglicht erst eine CAN-FD-Systemauslegung für heutige Topologien. Auch das von der Sende-/Empfangseinrichtung 12 in der Sendesignalbearbeitungseinrichtung 123 durchgeführte Verfahren gemäß Fig. 12 ist anwendbar für CAN-HS und CAN-FD. Zudem ist es vorteilhaft, dass das von der Sende-/Empfangseinrichtung 12 in der Sendesignalbearbeitungseinrichtung 123 durchgeführte Verfahren gemäß Fig. 12 unabhängig von bestimmten Kommunikationsphasen auf dem Bus 40 ist.

Alle zuvor beschriebenen Ausgestaltungen des Bussystems 1 der Teilnehmerstationen 10, 20,30 und des Verfahrens gemäß dem ersten bis dritten Ausführungsbeispiel können einzeln oder in allen möglichen Kombinationen Verwendung finden. Zusätzlich sind insbesondere folgende Modifikationen denkbar.

Das zuvor beschriebene Bussystem 1 gemäß dem ersten bis dritten Ausführungsbeispiel ist anhand eines auf dem CAN-Protokoll basierenden Bussystems beschrieben. Das Bussystem 1 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1 gemäß dem ersten bis dritten Ausführungsbeispiel ist insbesondere ein CAN-Netzwerk oder ein CAN-FD-Netzwerk oder ein FlexRay-Netzwerk.

Die Anzahl und Anordnung der Teilnehmerstationen 10, 20, 30 in den Bussystemen 1 gemäß dem ersten bis dritten Ausführungsbeispiel ist beliebig. Insbesondere können auch nur Teilnehmerstationen 10 oder Teilnehmerstationen 30 in den Bussystemen 1 des ersten bis dritten Ausführungsbeispiels vorhanden sein.

Um eine noch höhere Datenrate zu erzielen, kann innerhalb des CAN-Rahmens der Nachrichten 45, 46, 47 die Datenübertragung analog zu Datenübertragungsprotokollen erfolgen, wie beispielsweise Ethernet, usw.

Die Funktionalität der zuvor beschriebenen Ausführungsbeispiele lässt sich in einem Transceiver bzw. einer Sende-/Empfangseinrichtung 12 bzw. einer Sendeeinrichtung oder einem CAN-Transceiver oder einem Transceiver-Chipsatz oder einem CAN-Transceiver-Chipsatz oder auch in einer Kommunikationssteuereinrichtung 11, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) oder in einer integrierten Gesamtlösung, bei welchem nur ein elektronischer Baustein (Chip) vorhanden ist, eingebettet ist.

## Patentansprüche

1. Teilnehmerstation (10; 30) für ein Bussystem (1), mit einer Sende-/Empfangseinrichtung (12) zum Senden oder Empfangen einer Nachricht (45; 46; 47) an/von mindestens einer weiteren Teilnehmerstation des Bussystems (1) über das Bussystem (1), bei welchem Bussystem (1) zumindest zeitweise ein exklusiver, kollisionsfreier Zugriff einer Teilnehmerstation (10, 20, 30) auf einen Bus (40) des Bussystems (1) gewährleistet ist, wobei die Sende-/Empfangseinrichtung (12) eine Sendesignalbearbeitungseinrichtung (123) zur Sendesignalbearbeitung eines von der Sende-/Empfangseinrichtung (12) zu sendenden Sendesignals aufweist, **dadurch gekennzeichnet, dass** die Sendesignalbearbeitungseinrichtung (123) zur Einstellung einer vorbestimmten Bitsymmetrie von Bits des Sendesignals durch Erzeugung eines internen Sendesignals für die Nachricht (45; 46; 47) ausgestaltet ist,
wobei bei dem internen Sendesignal die Dominantphase der Bits verkürzt und die Rezessivphase von Bits verlängert ist.

2. Teilnehmerstation (10; 30) nach Anspruch 1, wobei die Sendesignalbearbeitungseinrichtung (123) zur Verzögerung der fallenden Flanke eines Bits in dem internen Sendesignal ausgestaltet ist, so dass die Dominantphase der Bits verkürzt und die Rezessivphase von Bits verlängert ist.

3. Teilnehmerstation (10; 30) nach Anspruch 1 oder 2, wobei die Sendesignalbearbeitungseinrichtung (123) ausgestaltet ist, eine Zeit zur Verzögerung der fallenden Flanke eines Bits in dem internen Sendesignal abhängig von einem Ergebnis einer Messung der Bitsymmetrie auszuführen.

4. Teilnehmerstation (10; 30) nach einem der vorangehenden Ansprüche, wobei die Sendesignalbearbeitungseinrichtung (123) ausgestaltet ist, eine Sendesignalbearbeitung nur auszuführen, wenn die Teilnehmerstation (10; 30) selbst Sender ist.

5. Teilnehmerstation (10; 30) nach einem der vorangehenden Ansprüche, wobei die Sendesignalbearbeitungseinrichtung (123) zudem zum Ein- oder Ausschalten einer Sendesignalbearbeitung abhängig von der Arbitrationsphase (451; 453) und des Datenbereichs (452) der Nachricht (45; 46; 47) ausgestaltet ist.

6. Teilnehmerstation (10; 30) nach Anspruch 5, wobei die Sendesignalbearbeitungseinrichtung (123) ausgestaltet ist, eine Sendesignalbearbeitung nur für den Datenbereich (452) auszuführen.

7. Teilnehmerstation (10; 30) nach Anspruch 5 oder 6,
wobei die Sende-/Empfangseinrichtung (12) Sendestufen für Busadern CAN_H und CAN_L des Busses (40) aufweist, und
wobei die Sendesignalbearbeitungseinrichtung (123) zur Modifikation der Sendestufen für CAN_H und CAN_L ausgestaltet ist, so dass die Sendestufen für CAN_H und CAN_L den Zustandswechsel von dominant zu rezessiv im Datenbereich (452) aktiv treiben.

8. Teilnehmerstation (10; 30) nach einem der vorangehenden Ansprüche, zudem mit einer Kommunikationssteuereinrichtung (11) zur Steuerung der Kommunikation im Bussystem (1), wobei die Kommunikationssteuereinrichtung (11) oder die Sende-/Empfangseinrichtung (12) zur Erfassung eines Datenbereichs (452) ausgestaltet sind.

9. Bussystem (1), mit
einem Bus (40), und
mindestens zwei Teilnehmerstationen (10; 20; 30), welche über den Bus (4) derart miteinander verbunden sind, dass sie miteinander kommunizieren können,
wobei mindestens eine der mindestens zwei Teilnehmerstationen (10; 20; 30) eine Teilnehmerstation (10; 30) nach einem der vorangehenden Ansprüche ist.

10. Verfahren zur Verbesserung der Sendequalität in einem Bussystem (1), bei welchem zumindest zeitweise ein exklusiver, kollisionsfreier Zugriff einer Teilnehmerstation (10, 20, 30) auf einen Bus (40) des Bussystems (1) gewährleistet ist, mit den Schritten
Bearbeiten (S3), mit einer Sendesignalbearbeitungseinrichtung (123) einer Sende-/Empfangseinrichtung (12) der Teilnehmerstation (10, 30), eines von der Sende-/Empfangseinrichtung (12) zu sendenden Sendesignals, **dadurch gekennzeichnet, dass** eine vorbestimmte Bitsymmetrie von Bits des Sendesignals durch Erzeugung eines internen Sendesignals eingestellt wird, bei welchem die Dominantphase der Bits verkürzt und die Rezessivphase von Bits verlängert ist, und
Senden (S4; S41), mit der Sende-/Empfangseinrichtung (12), des internen Sendesignals als Nachricht (45; 46; 47) an mindestens eine weitere Teilnehmerstation des Bussystems (1) über das Bussystem (1).

## Claims

1. Subscriber station (10; 30) for a bus system (1), having
a transmission/reception device (12) for sending or receiving a message (45; 46; 47) to/from at least one further subscriber station of the bus system (1) via the bus system (1), in which bus system (1), at least intermittently, exclusive collision-free access by a subscriber station (10, 20, 30) to a bus (40) of the bus system (1) is ensured, wherein the transmission/reception device (12) has a transmission signal processing device (123) for transmission signal processing of a transmission signal to be sent by the transmission/reception device (12), **characterized in that** the transmission signal processing device (123) is configured to adjust a predetermined bit symmetry of bits of the transmission signal by generating an internal transmission signal for the message (45; 46; 47), wherein the dominant phase of the bits in the internal transmission signal is shortened and the recessive phase of bits is lengthened.

2. Subscriber station (10; 30) according to Claim 1, wherein the transmission signal processing device (123) is configured to delay the falling edge of a bit in the internal transmission signal, so that the dominant phase of the bits is shortened and the recessive phase of bits is lengthened.

3. Subscriber station (10; 30) according to Claim 1 or 2, wherein the transmission signal processing device (123) is configured to implement a time for delaying the falling edge of a bit in the internal transmission signal depending on a result of a measurement of the bit symmetry.

4. Subscriber station (10; 30) according to one of the preceding claims, wherein the transmission signal processing device (123) is configured to execute transmission signal processing only if the subscriber station (10; 30) itself is a transmitter.

5. Subscriber station (10; 30) according to one of the preceding claims, wherein the transmission signal processing device (123) is moreover configured to switch transmission signal processing on or off depending on the arbitration phase (451; 453) and the data area (452) of the message (45; 46; 47).

6. Subscriber station (10; 30) according to Claim 5, wherein the transmission signal processing device (123) is configured to execute transmission signal processing only for the data area (452).

7. Subscriber station (10; 30) according to Claim 5 or 6,
wherein the transmission/reception device (12) has transmission stages for bus wires CAN_H and CAN_L of the bus (40), and wherein the transmission signal processing device (123) is configured to modify the transmission stages for CAN_H and CAN_L, so that the transmission stages for CAN_H and CAN_L actively make the state change from dominant to recessive in the data area (452).

8. Subscriber station (10; 30) according to one of the preceding claims, moreover having a communication control device (11) for controlling the communication in the bus system (1), wherein the communication control device (11) or the transmission/reception device (12) is configured to detect a data area (452).

9. Bus system (1), having
a bus (40) and
at least two subscriber stations (10; 20; 30) that are connected to one another via the bus (4) such that they can communicate with one another,
wherein at least one of the at least two subscriber stations (10; 20; 30) is a subscriber station (10; 30) according to one of the preceding claims.

10. Method for improving the transmission quality in a bus system (1), in which, at least intermittently, exclusive collision-free access by a subscriber station (10, 20, 30) to a bus (40) of the bus system (1) is ensured, having the steps of
processing (S3), using a transmission signal processing device (123) of a transmission/reception device (12) of the subscriber station (10, 30), a transmission signal to be sent by the transmission/reception device (12), **characterized in that** a predetermined bit symmetry of bits of the transmission signal is adjusted by generating an internal transmission signal in which the dominant phase of the bits is shortened and the recessive phase of bits is lengthened, and
sending (S4; S41), using the transmission/reception device (12), the internal transmission signal as a message (45; 46; 47) to at least one further subscriber station of the bus system (1) via the bus system (1).

## Revendications

1. Station d'abonné (10 ; 30) destinée à un système de bus (1), comportant
un dispositif d'émission et de réception (12) destiné à émettre ou recevoir un message (45 ; 46 ; 47) vers/depuis au moins une autre station d'abonné du système de bus (1) par l'intermédiaire du système de bus (1), système de bus (1) pour lequel un accès sans collision exclusif d'une station d'abonné (10, 20, 30) à un bus (40) du système de bus (1) est assuré au moins temporairement, dans laquelle le dispositif d'émission et de réception (12) comporte un dispositif de traitement de signal d'émission (123) destiné à effectuer un traitement de signal d'émission d'un signal d'émission devant être émis par le dispositif d'émission et de réception (12), **caractérisé en ce que** le dispositif de traitement de signal d'émission (123) est conçu pour régler une symétrie binaire prédéterminée des bits du signal d'émission en générant un signal d'émission interne pour le message (45 ; 46 ; 47),
dans lequel la phase dominante des bits est raccourcie et la phase récessive des bits est prolongée pour le signal d'émission interne.

2. Station d'abonné (10 ; 30) selon la revendication 1, dans laquelle le dispositif de traitement de signal d'émission (123) est conçu pour retarder le front descendant d'un bit dans le signal d'émission interne, de manière à ce que la phase dominante des bits soit raccourcie et à ce que la phase récessive des bits soit prolongée.

3. Station d'abonné (10 ; 30) selon la revendication 1 ou 2, dans laquelle le dispositif de traitement de signal d'émission (123) est conçu pour introduire un temps de retard du front descendant d'un bit dans le signal d'émission interne en fonction d'un résultat d'une mesure de la symétrie binaire.

4. Station d'abonné (10; 30) selon l'une quelconque des revendications précédentes, dans laquelle le dispositif de traitement de signal d'émission (123) est conçu pour n'effectuer un traitement du signal d'émission que lorsque la station d'abonné (10 ; 30) est elle-même un émetteur.

5. Station d'abonné (10 ; 30) selon l'une quelconque des revendications précédentes, dans laquelle le dispositif de traitement de signal d'émission (123) est en outre conçu pour activer ou désactiver un traitement du signal d'émission en fonction de la phase d'arbitrage (451 ; 453) et de la plage de données (452) du message (45 ; 46 ; 47).

6. Station d'abonné (10; 30) selon la revendication 5, dans laquelle le dispositif de traitement de signal d'émission (123) est conçu pour n'effectuer un traitement du signal d'émission que pour la plage de données (452).

7. Station d'abonné (10; 30) selon la revendication 5 ou 6,
dans laquelle le dispositif d'émission et de réception (12) comporte des étages d'émission destinés à des conducteurs de bus CAN_H et CAN_L du bus (40), et dans laquelle le dispositif de traitement de signal d'émission (123) est conçu pour modifier les étages d'émission destinés à CAN_H et CAN_L de manière à ce que les étages d'émission destinés à CAN H et CAN L déclenchent de manière active le changement d'état de dominant à récessif dans la plage de données (452).

8. Station d'abonné (10; 30) selon l'une quelconque des revendications précédentes, comportant en outre un dispositif de commande de communication (11) pour commander la communication dans le système de bus (1), dans laquelle le dispositif de commande de communication (11) ou le dispositif d'émission et de réception (12) sont conçus pour détecter une plage de données (452).

9. Système de bus (1), comportant un bus (40), et
au moins deux stations d'abonnés (10 ; 20 ; 30) qui sont reliées l'une à l'autre par l'intermédiaire du bus (4) de manière à ce qu'elles puissent communiquer l'une avec l'autre,
dans laquelle au moins l'une des au moins deux stations d'abonnés (10 ; 20 ; 30) est une station d'abonné (10 ; 30) selon l'une quelconque des revendications précédentes.

10. Procédé d'amélioration de la qualité d'émission dans un système de bus (1), dans lequel un accès sans collision exclusif d'une station d'abonné (10, 20, 30) à un bus (40) du système de bus (1) est assuré au moins temporairement, comprenant les étapes consistant à
traiter (S3), au moyen d'un dispositif de traitement de signal d'émission (123) d'un dispositif d'émission et de réception (12) de la station d'abonné (10, 30), un signal d'émission devant être émis par le dispositif d'émission et de réception (12),
**caractérisé en ce qu'**une symétrie binaire prédéterminée des bits du signal d'émission est réglée en générant un signal d'émission interne,
dans lequel la phase dominante des bits est raccourcie et la phase récessive des bits est prolongée, et émettre (S4 ; S41), au moyen du dispositif d'émission et de réception (12), le signal d'émission interne en tant que message (45 ; 46 ; 47) vers au moins une autre station d'abonné du système de bus (1) par l'intermédiaire du système de bus (1).
